# EUROPEAN PATENT APPLICATION

(11) **EP 4 775 976 A1**
(43) Date of publication of application: **15.07.2026**
(21) Application number: 26151075.4
(22) Date of filing: 09.01.2026
(51) Int. Cl.: G01N 29/04, E21B 47/002, E21B 47/00, G01N 29/06, G01N 29/26, G01N 29/265

(54) **METHOD AND APPARATUS FOR FLAW DETECTION USING SIGNAL CLASSIFICATION WITH ULTRASONIC TESTING**

(30) Priority: 09.01.2025 GB 202500223
(71) Applicant: Darkvision Technologies Inc., North Vancouver, BC V7M 3G3 (CA)
(72) Inventor: DA COSTA FILHO, Carlos Alberto, North Vancouver, V7M 3G3 (CA); D'SOUZA, Derrell, North Vancouver, V7M 3G3 (CA); ZAHIRI, Reza, North Vancouver, V7M 3G3 (CA)
(74) Representative: Ter Meer Steinmeister & Partner

(57) **Abstract**

Devices and methods for processing ultrasound images of manufactured parts to determine cracks in the parts. The devices comprise an imaging device with one or more ultrasonic transducer arrays that emit and receive ultrasound waves at various angles and distances, and a processing circuit that filters, beamforms, and compounds the ultrasound data to generate images of the tubulars. The methods involve insonating the tubulars with plane waves at non-zero or zero angles, applying a specular or anti-specular filter to the ultrasound scans, identifying a wall region between the inner and outer surfaces of the tubulars, and identifying a crack region by the presence of a signal void or a mode conversion of the ultrasound waves. The size of the crack is determined by measuring the dimensions of the crack region or fitting a geometric model to the compounded image.

## Description

### FIELD OF THE INVENTION

The current disclosure relates generally to inspection of fluid-carrying tubulars, in particular using acoustic images to size and locate cracks in pipelines and downhole casings.

### BACKGROUND OF THE INVENTION

Nondestructive testing is a way to inspect and evaluate materials, components or assemblies without causing damage. Nondestructive testing may be used to find defects in manufactured parts such as tubulars, pipelines, casings, gears, airplane wings, wheels, and more. In the oil and gas industry, fluid-carrying structures such as pipelines and downhole tubing are critical components for the transportation and extraction of fluids. These structures or tubulars may be a well or pipes for carrying hydrocarbons or water, generally having a long, narrow form factor. A well includes cased and uncased wells within a surrounding formation, at any stage from during drilling to completion to production to abandonment. Cracks are a type of defect that are of particular interest as they are a major cause of failure in manufactured parts. Cracks are often present in welds and seams. Accurate and efficient detection of structural defects is essential for the safe and reliable operation of these structures.

Ultrasonic testing is a favored form of nondestructive testing where ultrasonic waves pass into a material that is being tested and reflect off defects to return to the transducer to be detected. However, it is difficult to detect cracks as the ultrasound waves may not always be reflected from cracks back to the transducer such that they can be detected, or only weak reflections may be generated, requiring the separation of a reflected signal from a crack from amongst all the noise encountered during inspection. Further, the surface from which a crack emanates is often a strong reflector, making it difficult to detect a weaker crack signal. In handheld nondestructive testing applications, cracks are somewhat easier to detect cracks as the operator can slowly and repeatedly inspect an area while manually interpreting the data on the display. An operator with years of experience can usually detect a crack from interpreting remaining crack signals over a plurality of views.

Automated crack detection is relevant when inspecting large areas such as pipelines which may be hundreds of kilometers long, downhole casings which may be many kilometers long, or in continuously manufactured products such as parts or slabs of material that may be continuously formed all day. Certain physical aspects about the tubulars such as pipelines and casings are pre-known or assumed, such as the diameter, section length, connection type, and expected weld connection location and orientation, such as transverse welds and longitudinal welds. Identifying cracks over the full extent of the tubulars presents problems for storing acoustic images and processing them. To obtain high resolution images, the transducer array must capture a frame every few millimeters, which typically results in terabytes of data. However, at practical memory limits, frame rates and processing speeds, it becomes very difficult to log pipelines or wells that are many kilometers long.

The inventors have appreciated a need for an improved methods and systems for automated detection of cracks in pipelines and downhole tubing that overcomes these limitations.

### SUMMARY OF THE INVENTION

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions. Implementations may include one or more of the following features. The method may include: tracing rays from the phased array ultrasonic transducer to the target and back to the plurality of transducer elements, using a model of the target including at least a surface of the target; and where classifying further may include applying an angular filter to the traced rays. The angular filter is defined by a first angular cut-off and a second angular cut-off. The angular filter is a band-stop angular filter, the first angular cutoff is in the range of -90 to -45 degrees with respect to an incident ray direction, and being preferably substantially -60 degrees, and the second angular cut-off is in the range of 45 to 90 degrees with respect to an incident ray direction, and being preferably substantially 60 degrees. The plurality of received signals include amplitude and phase information, and where classifying further may include applying an angular filter using one or more of amplitude and phase information of the plurality of received signals. The method may include determining a flaw region in the one or more image frames based on a representation of one of i), the flaw region may include a flaw region size and a flaw region location, and determining a flaw size further may include determining one or more of a flaw size and a flaw location based on one or more of the flaw region size and the flaw region location within the one or more image frames. Determining a flaw region in the one or more image frames may include identifying pixels in the one or more image frames with pixels values greater than a predetermined threshold. Determining the flaw size further may include determining a distance from the flaw region to a target surface opposite the flaw region, in a direction perpendicular to said target surface opposite the flaw region. Determining the flaw region further may include determining model parameter values for a shape model defining a shape of the flaw region, and where one or more of the flaw region size and the flaw region location are determined based on the model parameter values. The shape model defines a triangle. The shape model defines a quadrilateral. Classifying further may include classifying, from the plurality of received signals: a subset of features for ray directions corresponding to reflective events; and where generating one or more image frames further may include generating the one or more image frames based on one of i) and ii) and excluding the other one of i) and ii), and determining a flaw size further may include determining a flaw size based on a representation of one of i) and ii). Classifying ii) further may include applying an angular filter to the traced rays. The angular filter is a band-pass angular filter, the first angular cutoff is in the range of -90 to -45 degrees with respect to an incident ray direction, and being preferably substantially -60 degrees, and the second angular cut-off is in the range of 45 to 90 degrees with respect to an incident ray direction, and being preferably substantially 60 degrees. Determining a flaw size further may include determining a flaw tilt with respect to a normal direction of said first surface based on ii) and determining a flaw size based on a representation of i) and said flaw tilt. The method, may include the step of compounding the one or more image frames to generate one or more compounded image frames. The one or more image frames are generated from ultrasound waves with wavefronts that strike the first surface from opposing angles, relative to said first surface. Compounding the one or more image frames further may include performing one of multiplicative compounding and maximum value compounding on the one or more image frames. The method may include selecting a region of interest for the plurality of received signals. The one or more predetermined angles relative to said first surface may include one or more predetermined non-zero degree angles with respect to a normal direction of said first surface. The wavefronts of the ultrasound waves strike a first surface of the target at one or more opposing angles with respect to a normal direction of said first surface, the opposing angles in the range of -30 to **-10** degrees and 10 to 30 degrees, respectively. The opposing angles may include -20 and 20 degrees with respect to the normal direction of said first surface. The opposing angles may include -16.5 and 16.5 degrees with respect to the normal direction of said first surface. An imaging system for inspecting a target for defects may include: an imaging apparatus may include: an elongate body deployable in a cylindrical fluid conduit; one or more outward-facing ultrasound transducer phased arrays configured to emit ultrasound plane waves and to receive reflected ultrasound waves; and a memory for storing a plurality of received signals; at least one processor, including one or more cloud processors; and a computer-readable medium storing instructions that, when executed by the at least one processor, cause it to perform the method of any one to 29. Implementations of the described techniques may include hardware, a method or process, or computer software on a computer-accessible medium.

One general aspect includes a method of detecting a flaw in a target. The method also includes deploying an ultrasound imaging device may include at least one phased array ultrasonic transducer including a plurality of transducer elements, to image the target; emitting, from the at least one phased array ultrasonic transducer, one or more ultrasound waves, such that wavefronts of the ultrasound waves strike a first surface of the target at one or more predetermined angles relative to said first surface; receiving reflected ultrasound waves at the plurality of transducer elements of the phased array ultrasonic transducer to generate a plurality of received signals, and storing the plurality of received signals; tracing rays from the phased array ultrasonic transducer to the target and back to the plurality of transducer elements, using a model of the target including at least a surface of the target; classifying, from the plurality of received signals: a subset of features for ray directions corresponding to reflective events based on applying an angular filter to the traced rays. The method also includes generating one or more image frames based on iii); and determining a flaw size based within the one or more image frames based on a representation of iii). Other embodiments of this aspect include corresponding computer systems, apparatus, and computer programs recorded on one or more computer storage devices, each configured to perform the actions of the methods.

Implementations may include one or more of the following features. The method where the angular filter is a band-pass angular filter with a first angular cutoff in the range of -90 to -45 degrees with respect to an incident ray direction, and being preferably substantially -60 degrees, and with a second angular cut-off in the range of 45 to 90 degrees with respect to an incident ray direction, and being preferably substantially 60 degrees. Implementations of the described techniques may include hardware, a method or process, or computer software on a computer-accessible medium.

One general aspect includes a method of detecting a flaw in a target. The method also includes deploying an ultrasound imaging device may include at least one phased array ultrasonic transducer including a plurality of transducer elements, to image the target; emitting, from the at least one phased array ultrasonic transducer, one or more ultrasound waves, such that wavefronts of the ultrasound waves strike a first surface of the target at an angle between -5 and 5 degrees with respect to a normal direction of said first surface; receiving reflected ultrasound waves at the plurality of transducer elements of the phased array ultrasonic transducer to generate a plurality of received signals, and storing the plurality of received signals; classifying, from the plurality of received signals, a subset of mode-converted longitudinal wave reflective features for ray directions corresponding to reflective events; generating one or more image frames based on the subset of mode-converted longitudinal wave reflective features; and determining a flaw size based on a representation of the subset of mode-converted longitudinal wave reflective features within the one or more image frames. Other embodiments of this aspect include corresponding computer systems, apparatus, and computer programs recorded on one or more computer storage devices, each configured to perform the actions of the methods.

Implementations may include one or more of the following features. The method may include compounding the one or more image frames to generate one or more compounded image frames. Compounding the one or more image frames further may include performing one of multiplicative compounding and maximum value compounding on the one or more image frames. Determining a flaw size further may include determining one or more of a flaw size and a flaw location based on a representation of subset of mode-converted longitudinal wave reflective features within the one or more image frames. Implementations of the described techniques may include hardware, a method or process, or computer software on a computer-accessible medium.

Further aspects of the methods and systems as described herein are set out below and in the appended claims.

### BRIEF DESCRIPTION OF THE DRAWINGS

Various objects, features and advantages will be apparent from the following description of embodiments of the methods, systems and devices as described herein, as illustrated in the accompanying drawings. The drawings are not necessarily to scale, emphasis instead being placed upon illustrating the principles of various embodiments of the methods, systems and devices as described herein.
FIG. **1** is a schematic representation of an imaging device deployed in a pipeline as an inline inspection tool string in accordance with one embodiment as described herein.
FIG. **2** is a lateral view of an imaging device in accordance with one embodiment as described herein.
FIG. **3** is a perspective view of an imaging device in accordance with one embodiment as described herein, including a schematic view of a reference coordinate system.
FIG. **4A** is a perspective view showing a tubular with cracks and corrosion.
FIG. **4B** is an end view of an imaging tool in a tubular showing alternative planewaves.
FIG. **5A** is a schematic view of a transducer array and its imaging field.
FIG. **5B** is a schematic view of an acoustic array in an angled arrangement.
FIG. **6** is a block diagram of an imaging device in accordance with one embodiment as described herein.
FIG. **7A** is a schematic representation of the transmission and reflection of ultrasound waves.
FIG. **7B** is a schematic representation of the transmission and reflection of ultrasound waves.
FIG. **7C** is a schematic representation of the transmission and reflection of ultrasound waves.
FIG. **8A** is a schematic representation of the geometry of a reflected signal gap due to a crack in a target, according to one embodiment as described herein.
FIG. **8B** is a schematic representation of the geometry of a reflected signal gap due to a crack in a target, according to one embodiment as described herein.
FIG. **8C** is a schematic representation of the geometry of a compounded reflected signal gap due to a crack in a target, according to one embodiment as described herein.
FIG. **9** is a schematic representation of the transmission and reflection of ultrasound waves.
FIG. **10** is an example of a channel data frame obtained from a 0 degree transmit, showing sloping events from a mode conversion of a longitudinal wave from a crack in a target.
FIG. **11** is a blown-up section of FIG. **10****.**
FIG. **12** is a flow diagram for carrying out the method in accordance with one embodiment as described herein.
FIG. **13** shows exemplary ultrasound image data at various stages of the method for crack detection, according to one embodiment as described herein.
FIG. **14** is a flow diagram for carrying out the method in accordance with one embodiment as described herein.
FIG. **15A** shows exemplary ultrasound image data of the method for crack detection, according to one embodiment as described herein.
FIG. **15B** shows exemplary ultrasound image data of the method for crack detection, according to one embodiment as described herein.
FIG. **15C** shows exemplary ultrasound image data of the method for crack detection, according to one embodiment as described herein.
FIG. **16** is a flow diagram for carrying out the method in accordance with one embodiment as described herein.
FIG. **17** shows exemplary ultrasound image data at various stages of the method for crack detection, according to one embodiment as described herein.
FIG. **18** shows exemplary ultrasound image data at various stages of the method for crack detection, according to one embodiment as described herein.
FIG. **19A** shows simulated results for the method for crack detection, according to one embodiment as described herein.
FIG. **19B** shows simulated results for the method for crack detection, according to one embodiment as described herein.

### DETAILED DESCRIPTION OF THE INVENTION

With reference to the accompanying figures, various aspects of the method, system and device as described herein will now be described. For the purposes of illustration, components depicted in the figures are not necessarily drawn to scale. Instead, emphasis is placed on highlighting the various contributions of the components to the functionality of various aspects as described herein. Several possible alternative features are introduced throughout this description and described accordingly. It is to be understood that, according to the knowledge and judgment of persons skilled in the art, such alternative features may be substituted in various combinations to arrive at different embodiments as described herein. For the sake of simplicity and clarity, the same reference numbers have been used in different figures to show similar or corresponding elements throughout the figures and description.

While many specific details have been provided for a thorough and complete understanding of the embodiments as described herein, it will be understood by those of ordinary skill in the art that said embodiments can be practiced even without these specific details. In other instances, detailed descriptions of components, methods and procedures have not been provided to avoid obscuring the relevant features being described. Further, the embodiments described herein should not be considered as limiting the scope of the method, system and devices as recited in the claims.

Systems and methods are disclosed for capturing ultrasound reflections from a target by an acoustic imaging tool to detect flaws in a target. An acoustic imaging tool generally comprises an imaging device **10** for imaging a fluid-carrying tubular **2** with a circular cross section for carrying fluids such as hydrocarbons, natural gas or water, such as an oilwell casing or pipeline, and having an elongate, cylindrical form factor through which an imaging device **10** can move longitudinally. Pipelines typically include multiple beacons **3,** at intervals along the length of the pipeline, with access to a communications network. An operations site **18** deploys the device into the tubular and retrieves data from the imaging device **10.** In embodiments, the data is processed in part on an imaging device **10.** In embodiments, the data is processed and visualized at a computer **19,** normally remote from the operations site. Computer **19** may comprise one or more processors, including one or more cloud processors. Metal wall loss in a tubular can result from corrosion **6,** pitting **7,** cracks **8,** and milling, or other forms of mechanical damage such as deformation of some or all the sections of the liner due to mechanical stress through compression, tension, and torsion. During its lifetime, the structural integrity of a tubular can become compromised, which can lead to leaks **9** or failures. To assess the condition and environmental impact of the pipe, a tubular can be assessed to identify such flaws which contribute to wall loss. Remaining wall thickness, which is the obverse of wall loss, can be used to calculate the burst pressure strength of the tubular.

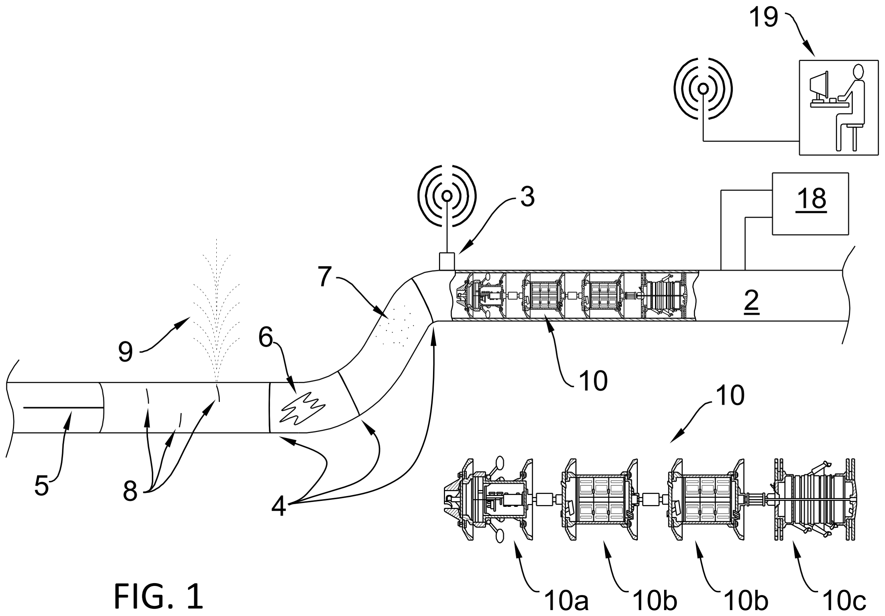

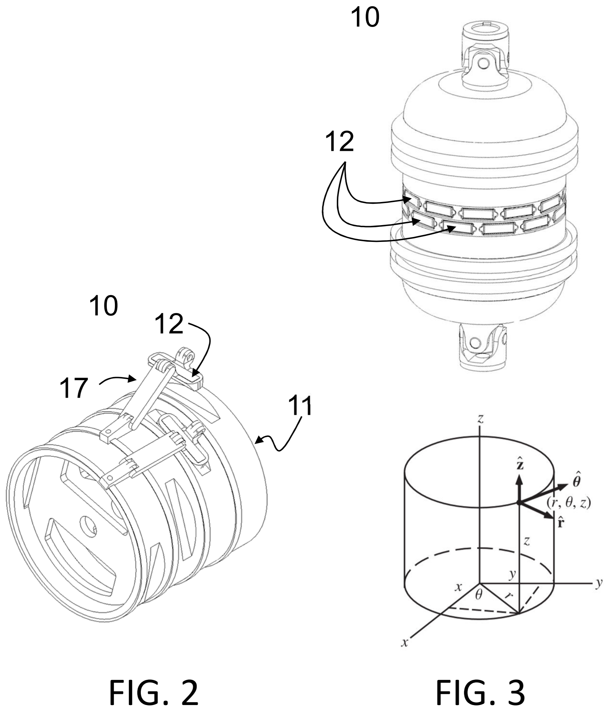

Inline inspection vehicles or inline inspection tools, also known as "smart pigs" or "pigs", move inside pipelines **2,** using a range of sensor technologies to inspect pipelines for defects. Inline inspection tools are designed to navigate the complex geometry of pipelines, including bends, valves, and other fittings, while providing detailed information about the pipeline's condition. In embodiments, the imaging device **10** includes an inline inspection tool string comprising multiple tool string vehicles, as shown in FIGS. **1** and **2****,** or operated alone. With reference to FIG. **2****,** a tool string may include multiple tool string vehicles, such as one or more sensor vehicles **10a,** one or more battery vehicles **10b,** and one or more imaging vehicles **10c.**

With reference to FIGs. **3A** and **3B,** the tool string vehicles of the imaging device **10** may be a modular inline inspection tool, which is a modular vehicle made up of several swappable, configurable stacked sensor modules **11** that are removably connected to each other, allowing for easy customization and modification for each job. The imaging device **10** typically also has an elongate form factor and is sized to be deployable within the fluid-carrying tubular **2,** such as a pipeline or wellbore casing. Each sensor module **11** may comprise one or more transducer arrays **12** mounted with each module, the transducer arrays **12** facing radially outward and typically in a rotationally offset fashion to create a helical arrangement of sensors, and electronics, including an on-board processor for operating the sensors and receiving data from the sensors. Each module provides imaging of a certain section of the pipeline, and multiple imaged sections may be combined to visualize the entire pipeline. The tool may also comprise a separate battery vehicle mechanically and electrically connected to the plural sensor modules, sensor arms, drive cups, centralizer discs, heat sinks thermally coupling the electronics to an exterior of the sensor modules, and a control module. The tool is versatile and can be customized onsite for each job, using different sensors or imaging modes.

For clarity in explaining the present method and system, and with reference to FIG. **3C,** it is assumed that there is a 3D volume of ultrasound data made up of cross-sectional frames (i.e. in the ***r*-Θ** plane) of the target tubular, which frames are stacked together and extend longitudinally **(z).** Thus, each frame is an image in coordinates of azimuth and radius (Θ/***r***), and stacking frames completes the 3D image by incrementing in the axial **(z)** dimension. The native units for tubular volume may be cylindrical **(r,** *Θ*, **z)** as shown in FIG. **3C.** Ultrasound reflections are sampled to capture both positive and negative pressures. The signals are demodulated to create images with pixels of absolute signal energy, for example using a Hilbert Transform. A single frame comprises a plurality of scanlines **50** (*Θ*ᵢ) by a plurality of samples (time or radius ***r***ᵢ), where the brightness of each pixel represents the reflected energy at that time and scanline. The raw RF data may be stored in memory, deconvolved (e.g. using a Hilbert transform), or demodulated (e.g. through down-mixing) and then computing the envelope, to store intensity values in memory, using the native polar coordinate **(r, *Θ*, z)** of the radial array moving axially in the tubular. Further processing on this data is maintained in polar coordinates to preserve the data and avoid Cartesian approximations.

In operation, a typical data flow includes acquiring cross-sectional frames of the tubular and storing them as scanlines, which creates a natively polar coordinate system for a radial array. During subsequent visualization, the stored images can be visualized in the polar domain directly, or may be converted to Cartesian coordinates, with neighboring polar pixels combined for each Cartesian pixel, and rendering makes the compiled images of the tubular into an intuitive display. These Cartesian images are loaded into video memory as X, Y, Z pixels (aka voxels). A GPU operates on these Cartesian pixels to create visualization appropriate to a 2D monitor used by operators. The scan conversion from acquired ultrasound images to displayed images can be pre-computed for efficient viewing.

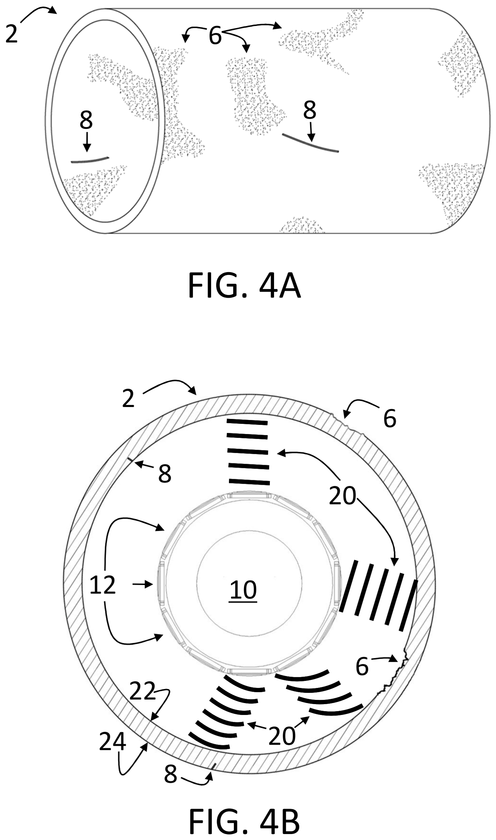

With reference to FIG. **4****,** the imaging device **10** comprises one or more transducer arrays **12.** In one embodiment, the transducer arrays **12** are formed as an outward-facing radial arrangement that insonify a cross section of the wellbore or tubular **2,** from a standoff distance, generating transmitted waves **20** that travel along scanlines **50,** towards the inner surface or circumference **22** of the tubular, and a portion of the ultrasound wave continues outwards to the outer surface or circumference **24** of the tubular **2.** The transmitted waves **20** may be a plane or curved wavefront, the former having a flat front and the latter having a front that is substantially curved or arc shaped. Curved / arc-shaped waves can be seen as the polar coordinate equivalent of planar waves. While multiple transmitted waves **20** are illustrated in FIG. **4****,** these may be transmitted concurrently or independently. As the imaging device **10** moves longitudinally in the **z** direction through the tubular **2,** the one or more transducer arrays **12** capture frames of these cross sections, preferably on the order of millimeters. The reflections of these acoustic waves from the wellbore or tubular features are converted to digital signals, often called raw radiofrequency (RF) data. Wellbore or tubular features include pre-known physical aspects of a tubular such as transverse welds **4** and longitudinal welds **5,** or features due to wear and deterioration, including corrosion **6,** pitting **7,** cracks and holes **8,** and physical deformation.

Each transducer array **12** comprises a plurality of acoustic transducer elements **13,** preferably operating in the ultrasound band. The frequency of the ultrasound waves generated by the transducer(s) is generally in the range of 200 kHz to 30 MHz, and may be dependent upon several factors, including the fluid types and velocities in the well or pipe and the speed at which the imaging device is moving. The use of a relatively large number of elements generates a fine resolution image of the object. In most uses, the wave frequency is 1 to 10 MHz, which provides reflection from micron features. The transducers may be piezoelectric, such as the ceramic material, PZT (lead zirconate titanate). Such transducers and their operation are well known and commonly available. Circuits **14** to drive and capture these arrays are also commonly available.

The number of individual elements in the transducer array affects the azimuthal resolution of the generated images. Typically, each transducer array is made up of 32 to 2048 elements and preferably 128 to 1024 elements. The logging speed and frame rate determines the axial resolution. An acoustic wave created by one or more of these elements, such that energy is generally focused along a line to form a what is called a scanline **50.** The scanlines are then assembled by the processor to form one frame that approximates one slice of the imaged location. These slices are assembled into a 3D volume in a process called slice stacking.

In an embodiment, transducer elements **13** are arranged as an evenly spaced one-dimensional transducer array **12.** In another embodiment, transducer elements **13** are arranged as evenly spaced two-dimensional transducer array. The transducer elements **13** may be distributed radially around the body of the device as a single transducer array **12,** or as part of multiple transducer arrays **12,** for example, as illustrated in FIGs. **3A, 3B** and **4****.** In such embodiments, the top surface of each of the transducer elements 13 faces radially away from the imaging tool **10** towards the wall of the target or tubular **2.** In an embodiment, the transducer elements are distributed around a section of the circumference of the tool housing, and this transducer arrangement captures a cross-sectional slice of the well covering an arc of the tubular. In a further embodiment, the transducer elements are distributed around the totality of the circumference of the tool housing, equidistant around the body of the device. Such a ring-shaped transducer arrangement captures a cross-sectional slice of the well covering 360° around the array **12.** As the imaging tool is moved axially in the well or pipe, in either direction, the transducer continually captures slices of the well that are perpendicular to the longitudinal axis of the well. Thousands of these slices are combined to create a 3D visualization of the well.

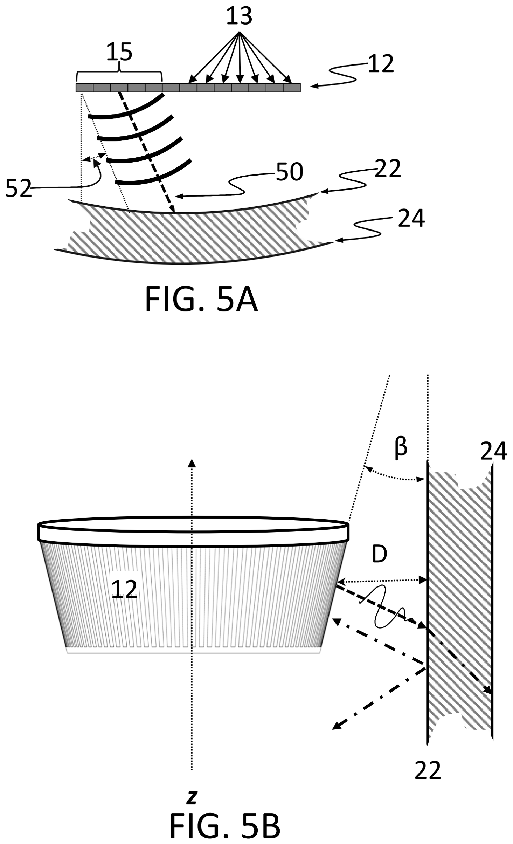

An acoustic transducer element **13** can both transmit and receive sound waves. The shape and size of an array, or limitations of the electronics may mean that each transmit and receive event takes place on less than the full physical array, i.e., an aperture **15.** The aperture **15** is a set of neighboring transducer elements that individually contribute towards the constructive wavefront and increase its acoustic energy. The number N of scanlines **50** that make up a full frame may be the same as the number of elements M in the array, but they are not necessarily the same. For example, a 256-element array may operate with a 64-element transmit aperture that slides from one side to the other, capturing many smaller scanlines than if the whole array were pulsed and received at once. The elements in the aperture are selected from the whole array by multiplexors. Normally these are a symmetrical set of elements opposite the part spot to be sonified, *i.e*. the spot and aperture center have the same azimuthal angle θ. Multiple transducer elements **13,** per aperture **15,** operate in a phase delayed mode to generate a scanline. There may be as many scanlines **50** as elements by changing the aperture by a single element for each scanline. The apparent origin of the wave can be synthesized within the device, referred to as a transmission point, by the set of transducers, or the aperture **15.** In FIG. **5A****,** scanline **50** appears to radiate out (dashed line) from the center of the five transducer elements **13** in aperture **15.** In embodiments, a scanline **50** may be steered at angle **52.**

In an embodiment, the one or more transducer arrays **12** are formed as an outward-facing arrangement, on a surface angled to form an oblique-shaped field of view, at an angle β of 10-45°, preferably about 20°, as shown in FIG. **5B****.** In yet a further embodiment, the one or more transducer arrays **12** are formed as a frustoconical outward facing arrangement, angled to form an oblique-shaped field of view, at an angle β of 10-45°, preferably about 20°. Thus, in these embodiments, the transducer elements are distributed on a surface with transducer elements **13** facing partially in the longitudinal direction of the device. In this arrangement, much of the sound wave reflects further down the tubular, but a small portion backscatters off imperfections on the surfaces or voids within the wall, back towards the transducer, per PCT Application WO 2016/201583 published December 22, 2016, to Darkvision Technologies. FIG **5B** shows acoustic pulses transmitted towards the inner wall, most of which bounces downward (as represented by the dashed lines) and some backwards (not illustrated) to the transducer elements **13.** Some of the wave energy propagates to the outer wall, then bounces downward and partially back to the transducer. Note that the angles of the waves and reflected waves in FIGs. **4****,** **5A** and **5B** aren't necessarily shown accurately, but in a manner that allows for the conceptualization of the waves.

The timing of each scan comprises a transmission window Tx, receiving window Rx and dwell period therebetween. As used herein, a scanline **50** is the stream of data received during Rx and may be provided in physical coordinates using the speed of sound. During transmission, the transducers are excited with an electrical pulser, which pulse may be square, sinusoidal or other waveform. At the end of Tx there is a dwell period while the wave travel outs and back to the transducer element or aperture. During the Rx window, the circuit 'listens' to reflections and transmissions at the transducer element or aperture. There may be multiple reflections and transmissions along paths of various lengths, so the Rx window is much wider than the Tx window. The reflections are received at the transducer elements **13.** The electrical signals of the reflections may be stored in raw form for later, offline beamforming and image reconstructions. Alternatively, the signals are beamformed in real time and the reconstructed image is stored on the imaging device.

In ultrasound arrays, multiple discreet omnidirectional pulses are emitted from the plural transducer elements **13,** which waves interfere constructively and destructively to produce a wavefront moving in the direction of the scanline. As known in the art, altering the timing of the pulse at each transducer element, can steer and focus the wavefront. In steering, the combined wavefront appears to move away in a non-orthogonal direction from the transducer face, but still in the plane of the array. In focusing, the waves all converge at a chosen distance from the elements **13.** The location of the convergence is the focal point and the insonified area defines the resolution of the system. The transmitted wave may or may not be focused at a point on the surface to be imaged. US Patent No. 5,640,371 provides a method and apparatus for acoustic imaging using beam focusing, beam steering and amplitude shading to increase image resolution and overcome side lobe effects, which may be used in pipelines.

The transmitted wavefront may be described as 'coherent,' 'weakly focused,' 'defocused,' 'unfocused,' 'plane wave', 'spherical', 'spiral', 'divergent,' or 'non-convergent' in as much as the transmitted waves may have some theoretical focal point within or behind the transducer. The transmitted waves may be a plane or curved wavefront, the former having a flat front and the latter having a front that is substantially curved or arc shaped. Curved / arc-shaped waves can be seen as the polar coordinate equivalent of planar waves. These shapes are created by phase delays of the pulses emitted by each transducer element. Notably, these fronts do not converge or focus on the surface of the target. The transmitted wavefront from the transducer towards a curved target, such as a pipeline or casing, can be an arc, rather than a flat plane wave. Preferably, a curved wavefront hits the inside of a tubular target at the same angle of incidence relative to the normal of the surface of the tubular along the whole area of sonification. The angle of incidence is what defines the overall steering angles for a transmit. This transmit may be computed by ray tracing, knowing the array position relative to the pipe, pipe geometry, speed of sound of fluid, and array geometry. Thus, the acoustic imaging tools can be preprogrammed to beam focus at the correct diameter and angles, logging at a rate and resolution that will capture features given the known physical aspects.

Receive beamforming is understood by persons skilled in the art of ultrasound. In broad terms, the processor uses plural phases delays, pre-stored in a memory (e.g. look-up-table, or LUT) that convolve / shift the signals based on different focal depths. These signals are combined to reconstruct the final image, whereby weakly focused reflections get diluted and strongly focused reflections are reinforced. As an example, "Delay and Sum" beamforming technique can be used for this purpose.

In conventional imaging, images are formed by beamforming one line at a time. This will drastically reduce the acquisition rate. In order to speed up the beamforming, the same channel data can be used with slightly different delays in order to generate multiple lines, which in preferred embodiments can be extended to generate an entire image slice around the tubular from a single transmit event. This is done by running parallel beamforming on all the scanlines at the same time. This is computationally intensive but allows for much faster image reconstruction.

After areas of the target are captured from plural angles and then receive beamformed to create plural reconstructed images, the step of compounding can be used to combine each of these reconstructed images to create a compounded image using summation of data in the overlapping zone. The summation can be coherent (using RF data) or envelope data (B-mode). The receive beamforming reconstruction will depend on the transmit delays and geometry of the transducer array. The individual angled images are shifted to the same locations, and corresponding pixels in each image are summed to create pixels of the compounded image. The compounded image removes noises that are not coherent in the individual images, reinforces reflectors seen in plural angles, and smooths over glints present in only one of the images.

The imaging device **10** may further comprise an acoustic lens covering an outer surface of one or more of the transducer arrays **12.** The acoustic lens may be convex or concave, or may be a concave or convex logarithmic lens having an extended focal zone. The skilled person will appreciate that focusing also depends on the relative speed of sound from the lens material to fluid.

In one embodiment, a convex lens is used. The convex lens is made of a material having an acoustic velocity less than the acoustic velocity of the fluid in the tubular. Typically, well fluid has an acoustic velocity of approximately 1300 to 1700 m/s. A suitable lens material having a lower acoustic velocity is room temperature vulcanization (RTV) silicone, which has an acoustic velocity of approximately 900 to 1050 m/s. With a convex lens, the elevation of the transducer array elements is generally from 5 to 50 mm, depending on the lens curvature and size of the tubular, and preferably 15 mm.

In another embodiment, a concave lens is used. The material of the concave lens preferably has an acoustic impedance close to the fluid in the tubular, and has a higher acoustic velocity than the fluid within the tubular. Suitable materials include hard plastics such as polymethylpentene (PMP) (e.g. TPXTM), polystyrene (PS), and poly(methyl methacrylate) (PMMA). The elevation of the transducer elements is generally from 5 to 50 mm depending on lens curvature and size of the tubular, and preferably 15 mm.

In a further embodiment, a logarithmic lens is used. The logarithmic lens is shaped to create an extended focal zone that can produce sharp images at a range of distances, i.e. images having a high depth of field. Having an extended focal zone is advantageous because a range of depths from inside a tubular to the outside of the casing or liner and everything in between can be imaged with the same tool. An extended focal zone also allows for wells having different diameters to be imaged with the same tool. The logarithmic lens can be concave or convex. A concave logarithmic lens would be made of a material having a higher velocity than the fluid in the tubular, such as polymethylpentene (PMP) (e.g. TPXTM), polystyrene (PS) or poly(methyl methacrylate) (PMMA). A convex logarithmic lens would be made of a material having a lower velocity than the fluid within the tubular, such as RTV silicone. The elevation of the transducer elements is generally from 5 to 50 mm depending on lens curvature and size of the tubular, and preferably 15 mm.

The imaging device **10** may include one or more centralizing elements, such as centralizer discs or other suitable means, for keeping the vehicle centered within the tubular for imaging quality. In the preferred embodiment, the device is concentric with the tubular, *i.e*. the longitudinal axis of the imaging device **10** is generally aligned with the longitudinal axis of the well or pipeline. Therefore, scanlines radiate perpendicular out from transducer elements **13,** arrive focused and perpendicular to the well or pipe surface, and reflect back to transducer elements **13.** The times of flight (ToF) for every transmission to the well or pipe are substantially the same, with small variations due to surface imperfections. In an embodiment, the receiving window Rx may be tightly framed around the inner and outer surfaces of the tubular or pipe, i.e. the time for recording reflections is timed to start just before the inner specular reflections and stop just after the outer specular reflections of the emitted ultrasound pulses. However, it is common for the imaging device 10 to be off-center of the tubular (i.e. the longitudinal axes are parallel but not aligned), a condition called eccentricity, resulting in varying times of flight depending on the imaging angle Θ. In other embodiments, the receiving window Rx may be extended to capture reflections from an off-center imaging device, or to capture signals corresponding to additional reflected and resonant signals from other known features of the tubular.

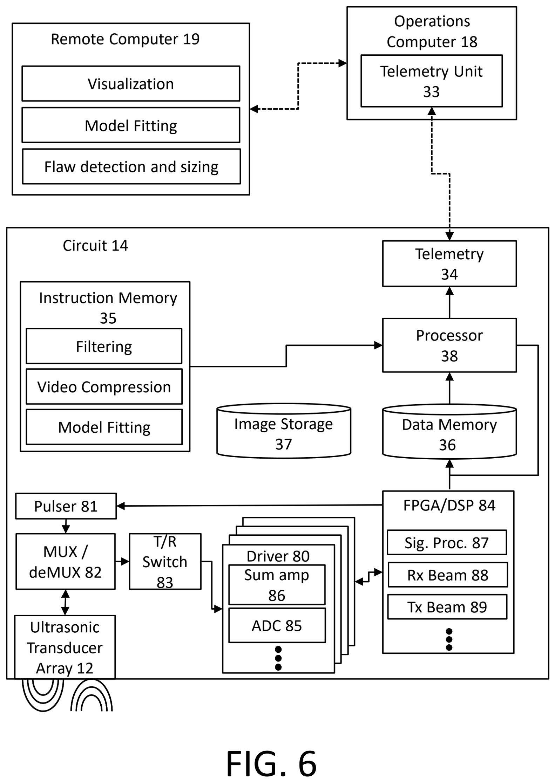

The device comprises a processing circuit for generating and receiving signals from the transducers. The skilled person will appreciate that the circuit may implement logic in various combinations of software, firmware, and hardware that store instructions process data and carry out the instructions. Specialized ultrasound circuits exist to drive and receive arrays of ultrasound transducers, such as LM96511 from Texas Instruments. FIG. **6** is a block diagram of components of the device's on-board circuits **14** and remote computing system **19,** including an onboard computer processor **38** (for display and post processing), FPGA block **84,** Summing Amps **86,** ADC **85,** MUX/DEMUX **82,** High Voltage T/R switch \**83,** High Voltage Pulser **81,** and timing chips. The FPGA is an efficient chip for integrating many logical operations. The block may comprise Tx beamforming **89** and Rx beamforming **88,** DVGA control (Digitally controlled Variable Gain Amplifiers, not shown), as well as data processing operations **87,** such as B-mode (brightness mode) and Doppler processing. Although not shown, the circuit may additionally comprise motor drivers and memory chips. By way of example, the transmission step may include selecting the elements **13** in the aperture **15,** calculating beamforming timings, loading the pulse timings from the FPGA **84,** activating the pulser **81** and MUXes **82** to pulse all elements. The dwell period may be set by the operator based on a nominal diameter of the pipe and speed of sound in the well fluid. The Rx window may be set to capture reflected pulses based on the known, measured or nominal parameters of the target and of the surrounding physical environment. The raw image data is initially stored in memory **36.** This may be Terabytes of data. Instructions running on the remote processor include modules for one or more of digital receive beamforming, ray tracing, compounding, classification of received signals, flaw region extraction and flaw characterization, and visualization. Intermediary images, such as a single beamformed image or the compounded image may be stored on the same or separate storage **37.** This shows a preferred division of resources for the method described above. However, as computing resources improve, certain processes could be moved onto the device, such as beamforming and compounding. This could also be done during the downtime of the device, when not actively imaging. In this manner, the recovered device is ready to upload fully compounded images to the remote computer for immediate visualization.

Without loss of generality, each of the circuit and electronic components described with reference to FIG. **6** may comprise multiples of such chips, e.g. the memory may be multiple memory chips. For the sake of computing efficiency, several of the functions and operations described separately above may actually by combined and integrated within a chip. Conversely certain functions described above may be provided by multiple chips, operating in parallel. For example, the LM96511 chip operates eight transducers, so four LM96511 chips are used to operate an aperture of 32 transducers.

After the ultrasound data has been filtered and corrected, it may be rendered for display. A rendering engine may reside in software or on a GPU and has numerous standard rendering algorithms to output a visually pleasing 2D image. The reflection signals may be displayed to a user in their raw signal form, whereby the 2D image is created from pixels separated by the signal's Time of Flight, and wherein pixel brightness is proportional to signal strength. Known rendering engines normally operates on pixels provided in Cartesian space, so a Cartesian voxel to display will be fetched from several polar coordinate voxels, LUT corrected, combined and then scan converted to Cartesian.

In an embodiment, a radial transducer array **12** creates an image frame by imaging an entire 360° cross-section of the target **2.** In physical memory, the frame is stored "unwrapped." Thus, although a frame for a radial array stores scanlines in order from 0 to 360° in memory, the two ends are in fact neighbors in the real-world tubular. Thus, algorithms that slide across multiple neighboring scanlines should also wrap around the end scanlines.

In addition to standard rendering options such as ray marching, texturing, and lighting, application-specific rendering may be applied to convey surface roughness, material reflectivity, attenuation, impedance and tubular defects. While some of these effects have no analogue in camera imaging, they highlight features detectable by ultrasound waves, especially those relevant to tubular structural integrity. For example, a small crack that is invisible to cameras may create a ringing ultrasound wave that can be displayed in a differentiating way on the monitor.

With further processing, a geometric model of the target or tubular may be created. Using edge detection and surface finding techniques, the processor can create a mesh of the tubular for analysis. Such analysis may include measuring diameter, lengths, connections or identifying damage and perforations.

In an embodiment, a transducer array **12** is used to sequentially emit ultrasound waves to insonate a surface of a target, for example an inner diameter surface of a tubular, at multiple angles with respect to a normal direction to the surface of the target. In embodiments, the surface is insonated with a plane wave, and the angle corresponds to the angle of incidence with respect to the normal direction of the surface. For example, for a flat surface, a plane wave with a flat wavefront is emitted, and for a curved surface, a divergent wave with a curved wavefront is emitted, and in both cases, the wavefronts are such that they always strike the insonated region of the surface of the target at the desired angle. The angle is chosen based on various parameters, such as the density of a fluid contained within a tubular. In embodiments, wavefronts are emitted such that they strike a target surface at opposing angles with respect to a normal direction of said target surface, for example in the range -30° to -10° and 10° to 30°, respectively. In a non-limiting example, a target tubular is imaged at -20°, 20° and 0° when it contains water, and a target tubular is imaged at -16.5°, 16.5° and 0° when it contains crude oil. Without loss of generality, the case of a wavefront striking a target surface at an angle with respect to the surface normal is interchangeably referred to herein as an angled transmission or a non-zero degree transmission. In embodiments, a target is insonated using steered transmissions using multiple angles to transmit waves such that they impact the surface of the target at a flat, 0° angle, and with positive and negative non-zero degree angles. A flat transmission of 0° is commonly used for acquiring surface characteristics such as geometry and surface defects. In embodiments, a flat transmission includes transmitting waves at small angles with respect to the surface normal, for example in the range of -5° to 5°. Without loss of generality, the case of a wavefront striking a target surface at or about zero degrees with respect to the surface normal is interchangeably referred to herein as a flat transmission, a zero degree transmission, or a small angle transmission.

In an embodiment, a region of interest in the scanline direction, corresponding to the thickness of the target, is set or selected, and subsequent processing steps are carried on this region. For example, the region of interest corresponds to the tubular wall between an inner diameter and an outer diameter. In embodiments, the location of the first surface of the target, for example the inner diameter of a tubular, and the location of a second surface of a target, for example the outer diameter of a tubular, are determined from the ultrasound reflections. In situations where reflections for a first surface or second surface are not available for a given scanline or region to determine the locations of the first surface and second surface, these are estimated using, for example, corresponding values from adjacent scanlines or known nominal values of the target.

As is well known, an ultrasound wave propagates through a medium between the ultrasound array **12** and the target, and the energy of the wave is reflected from boundaries between regions with different densities. Generally, the larger the difference in density, the greater the amount of reflected energy. Boundaries that lie with a generally perpendicular to the wavefront will generate stronger reflections than boundaries that lie parallel to the wavefront. In embodiments, the ultrasound wave is a plane wave generated with a wavefront generally matching the orientation of the target surface being insonated, as described above for flat transmissions. Typically, a significant proportion of the energy of a wave is reflected back to the ultrasound transducer array **12** for features that present a boundary generally perpendicular to the wavefront, such as a first surface or inner diameter of a tubular, a second surface or an outer diameter of a tubular, and such as longitudinal cracks.

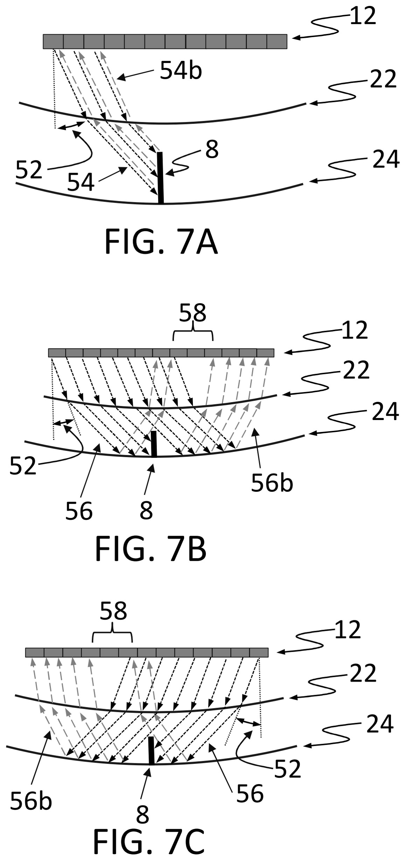

In embodiments, an ultrasound wavefront is steered to propagate at a predetermined transmit angle to obtain an angled transmission. Features in the target that do not generate strong reflections at a zero degree transmit angle can generate strong reflections when imaged at a non-zero degree angle. With reference to FIG. **7A****,** a transducer array **12** emits an ultrasound wave at an angle **52,** which follows ray directions or paths **54,** reaching crack **8** within the target **2.** A portion of the wave energy is reflected along paths **54b,** back to the transducer array **12,** as a specular reflection. Reflected ray directions or paths **54b** that return to the transducer array will form an angle with respect to the incident ray directions or paths **54** based on an orientation of a boundary. Additional reflections of the emitted ultrasound wave (not shown in FIG. **7A****),** such as from the surface of the inner circumference **22,** the surface of the outer circumference **24,** other features in the target (not shown) or due to internal reflections (not shown) may also reach the transducer array **12,** and can be used to generate an image of the insonated region. These may also be referred to as reflective events.

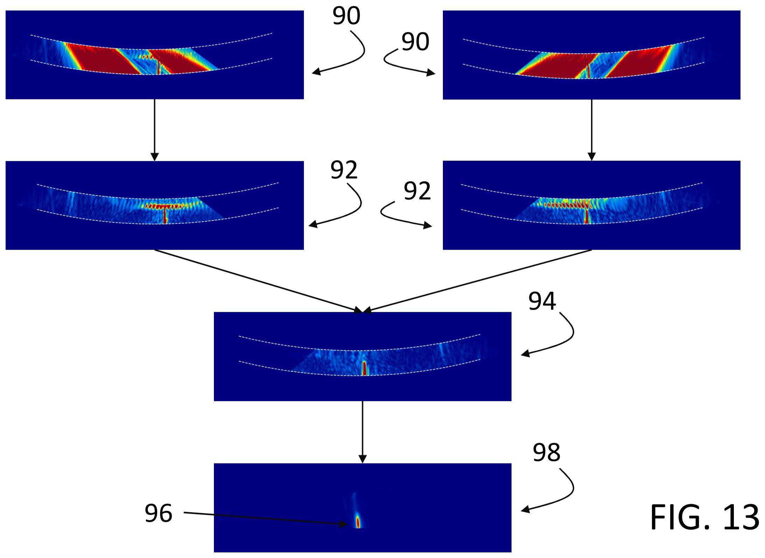

When a steered wavefront is emitted, a crack **8** within the insonated area of a target will generate a reflected signal void or gap **58** for some transducer elements **13** of the transducer array **12,** as illustrated in FIGS. **7B** and **7C****.** In other words, the defect within the target casts a shadow on the transducer array as the ray directions or paths **56b** are not reflected back to the array, in the general direction of the incident ray directions or paths **56.** With reference to FIGS. **7B** and **7C****,** a transducer array **12** emits an ultrasound wave which follows paths **56** at an angle **52,** striking a first surface of the target, such as inner diameter or circumference **22** of a tubular **2.** Without loss of generality, angle **52** may have a positive or negative, non-zero value. A portion of the energy of the ultrasound wave is reflected back (including along paths **54b** as illustrated in FIG. **7A****)** to the transducer array **12,** and a portion of the energy of the wave travels through the interior of the target, continuing to follow paths **56** and striking a second surface of the target, such as an outer diameter or circumference **24** of a tubular **2.** A portion of the ultrasound wave is reflected along paths **56b** through the wall of the target, past the boundary of the first surface or inner diameter **22,** and reaches the transducer array **12.** These may generally be referred to as transmissive events. The presence of a defect, for example crack **8,** within the wall of the target will result in reflections from the second surface, for example the outer diameter or backwall of the tubular, not reaching the ultrasound transducer array **12,** which will generate a gap **58** in the signal of the backwall reflection. In other words, a signal gap **58** is generated based on the assumption that a transmissive event should reach the transducer array **12.** FIGS. **13****,** **17** and **18****,** described in further detail below, show examples of typical ultrasound images generated when insonating a target with a defect, for example a crack in a tubular, showing reflections (e.g. paths **54b)** as well as the signal void (e.g. blocked paths **56b)** from the obstruction of the backwall reflection due to a crack.

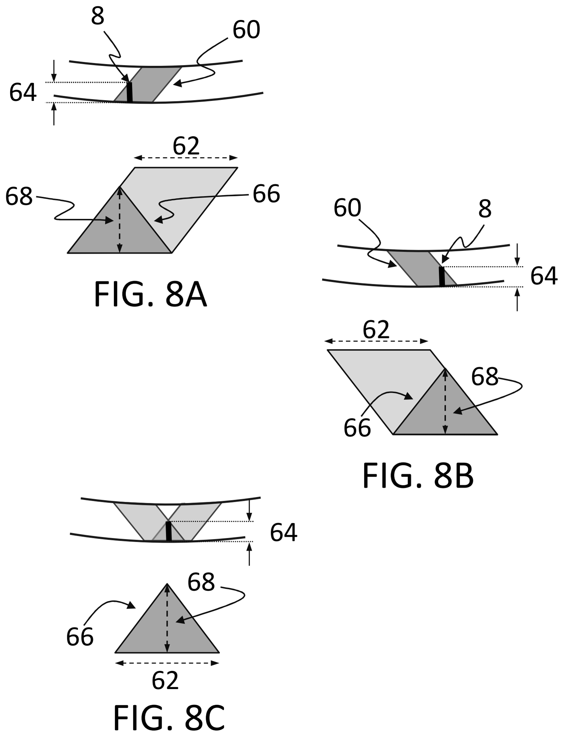

The resulting beamformed images from the ultrasound data received from reflections travelling along paths **56b** will show a characteristic profile when a flaw or crack is present in the target. FIGS. **8A** and **8B** schematically illustrate the characteristic profile or signal shadow shape **60** when a crack **8** is present in a target **2** for two non-zero angles. The signal shadow shape **60** is generally a quadrilateral, such as a parallelogram, where the dimension of the base **62** is approximately two times the depth **64** of crack **8.** In an embodiment, a triangle **66** can be fit to the signal shadow shape **60,** where the depth **64** of crack 8 is approximately half the dimension of the base of the triangle **66,** and the height **68** of triangle **66** equals the depth **64** of the crack **8.** The dimension of the base of the triangle generally equals the dimension of the base **62** of the parallelogram. It will be evident that the dimensions of the two remaining sides of the triangle can be calculated as the height multiplied by a factor of the square root of two (√2). In a further embodiment, multiple signal shadow shapes **60** from ultrasound reflections received from different angles can be combined, for example, by compounding the image data as described in further detail below, to obtain a triangle **66** as shown in FIG. **8C****.** The base **62** of the resulting triangle **66** is approximately equal to two times the depth **64** of crack **8,** and the height **68** of triangle **66** is approximately the same as the depth **64** of crack **8.** Note that the angles and dimensions of the signal shadows in FIGS. **8A-8C** aren't necessarily shown accurately, but in a manner that allows for the conceptualization of the general shape profiles.

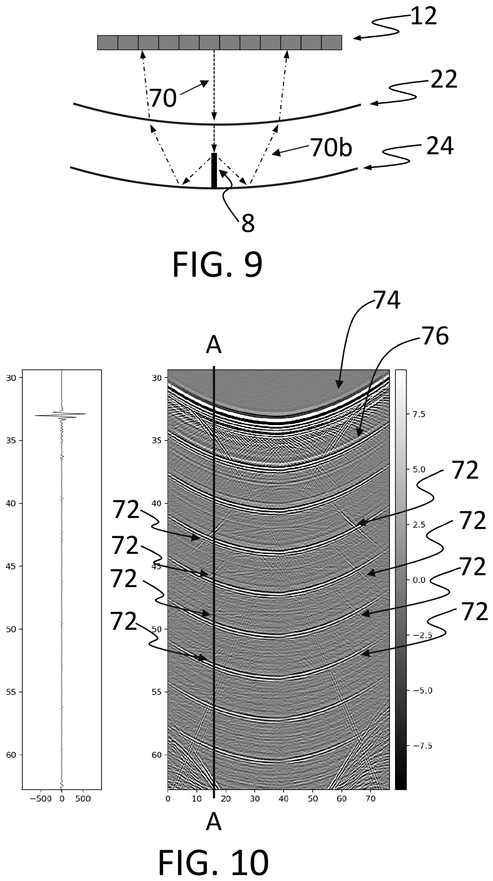

In a further embodiment, a target is insonated with a plane wave with a flat 0° transmission, as illustrated by paths **70** in FIG. **9****.** When the longitudinal ultrasound wave (L-wave) encounters a crack **8** within the target, a mode conversion of the ultrasound wave occurs. This mode conversion results in the generation of transverse waves (T-waves) within the target which propagate along paths **70b.** FIG. **10** displays an exemplary channel data frame from an acquisition using a 0° transmit of a target containing a crack. The image illustrates distinct sloping events **72** observed on both the left and right sides of the image, which can be attributed to the mode conversion of the L-wave. Specular reflections **74** of the first surface or inner diameter **22** of a tubular, and specular and resonant reflections **76** of second surface or outer diameter are also represented in FIG. **10.** FIG. 10 also displays amplitude information for one scanline along line **A-A.** The sloping events **72** within the ultrasound data provides information about a crack **8** within the target.

A beamformed image is generated from the ultrasound data for each of the one or more scanned angles. In an embodiment, the beamformed images comprise complex data, corresponding to amplitude and phase information for each of the image pixel locations. In embodiments, one or more filters are applied during beamforming to the ultrasound reflections received by the transducer array **12,** and a filtered and beamformed image is generated for each of the multiple scanned angles. In embodiments, a band-pass angular filter is applied to the angles formed between ray directions or paths of reflected waves and incident waves. In embodiments, a band-stop angular filter is applied to the angles formed between ray directions or paths of reflected waves and incident waves. In embodiments, f-k space or k-space domain filters targeting specific frequencies and angles, such as high spatial frequencies, are applied after beamforming.

During a next step, a compound image may be generated using one or more of the filtered and beamformed images obtained from a transducer array at an axial location, using known methods. In an embodiment, image compounding comprises additive compounding. In another embodiment, image compounding comprises multiplicative compounding. In a further embodiment, image compounding comprises maximum value compounding.

The resulting images map pixel intensity to potential flaw regions. In one embodiment, during a subsequent step, a maximum pixel intensity is determined for a resulting image, and pixels with values greater than a predetermined threshold are identified as belonging to a flaw region. In an embodiment, maximum pixel intensity along a plurality of lines is determined, where each of the plurality of lines may correspond to a direction normal to the first surface of the target, and the predetermined threshold is 6 decibels (dB) drop from the maximum value. In an embodiment, the predetermined threshold is a variable threshold, which varies by one or more of defect depth, defect angle, wave azimuth, or estimated target surface normal, to account for target geometry and defect location. In an embodiment, the crack region images are displayed to a user as a two-dimensional image.

Defects such as cracks in a tubular target can be defined by a crack depth or size, crack tilt, and crack azimuth. Crack depth or size refers to how far a crack extends from a surface of the target; alternatively, crack size can refer to a total length of a crack. Crack tilt refers to the angle a crack forms with respect to a surface normal direction from which it extends. Crack azimuth, or circumferential location, refers to the angle formed between a crack and a reference radius of a circular tubular.

Crack size is determined by measuring the extent of a crack region between the first surface and the second surface of the target. The crack size is characterized by both the length of the crack from a surface of the target, and the remaining distance from the end of the crack to opposing surface (remaining wall thickness). For example, if a crack is located on the inner diameter of a tubular, the length of the crack is determined by the distance from the inner diameter to the pixel within the crack region furthest from the inner diameter, and the remaining wall thickness is calculated as the distance between the pixel, within the crack region, furthest from the inner diameter, to the outer diameter. In an embodiment, the distances are calculated along a line that is generally perpendicular to the surface of one of the inner diameter or outer diameter. In a further example, if a crack is located on the outer diameter of a tubular, the remaining wall thickness is determined by the distance from the inner diameter to the pixel within the crack region closest to the inner diameter, along a line, the line preferably being generally perpendicular to the inner diameter, and the length of the crack is determined as the distance between the pixel, within the crack region and closest to the inner diameter, to the outer diameter.

### Crack Detection from Reflective Events

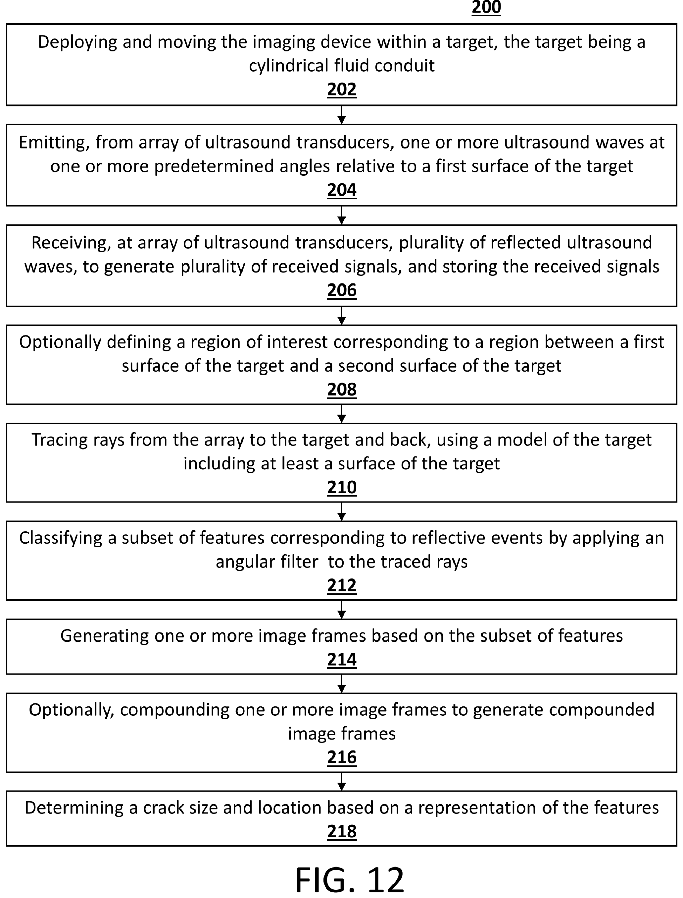

FIG. **12** is a flowchart of an example process 200. In some implementations, one or more process blocks of FIG. 12 may be performed by a device.

As shown in FIG. 12, process 200 may include deploying the imaging device within a target, for example a cylindrical fluid conduit (block 202). As also shown in FIG. 12, process 200 may include emitting, from the array of ultrasound transducers, one or more ultrasound waves at one or more predetermined angles relative to a first surface of the target (block 204). In embodiments, wavefronts are emitted using one or more of angled transmit and flat transmit. As further shown in FIG. 12, process 200 may include receiving, at the array of ultrasound transducers, a plurality of reflected ultrasound waves for each of the one or more emitted ultrasound waves, to generate a plurality of received signals, and storing said received signals (block 206). As also shown in FIG. 12, process 200 may optionally include defining a region of interest, for example defining a region between a first surface of the target and a second surface of the target (block 208). As further shown in FIG. 12, process 200 may include tracing rays from the ultrasonic transducer array to the target and back to the plurality of transducer elements forming the array, using a model of the target including at least a surface of the target (block 210); classifying a subset of features for ray directions corresponding to reflective events based on applying an angular filter to the traced rays (block 212); generating one or more image frames based on the subset of features (block 214); optionally, compounding the one or more image frames to generate one or more compounded image frames (block 216); and determining one of a flaw size and a flaw location in the target by based on the representation of the subset of features in the image frames, for example, by determining a distance of the crack region from one of a first surface and a second surface of the target (block **218).**

Although FIG. **12** shows example blocks of process **200,** in some implementations, process **200** may include additional blocks, fewer blocks, different blocks, or differently arranged blocks than those depicted in FIG. **12****.** Additionally, or alternatively, two or more of the blocks of process **200** may be performed in parallel.

With reference to FIG. **13****,** exemplary ultrasound image data at various stages of the method for crack detection according to one embodiment are shown. In an embodiment, a target is insonated with one or more plane ultrasound waves, and reflected ultrasound waves are received at the transducer array **12,** which includes reflections along paths **54b** and **56b** illustrated in FIGs. **7A, 7B** and **7C****,** respectively, among others. Exemplary renderings are illustrated at **90** in FIG. **13****.** In this embodiment, a specular band-pass angular filter is configured to allow specular reflections from a predetermined range of angles of the reflected paths or directions, with respect to an incident wave direction or path, and to block reflections with directions forming angles outside of the predetermined angular range. In other words, signals from reflective events are retained. Therefore, the specular band-pass angular filter classifies the received signals as within the predetermined range of ray or direction angles, or outside of said predetermined range. A specular band-pass angular filter is defined by a first, lower angular cut-off and a second, upper angular cut-off, such that reflection angles between the first, lower angular cut-off and the second, upper angular cut-off are retained, and reflection angles outside of the range are removed. As a non-limiting example, the specular band-pass angular filter can be set to allow reflections from the first surface and the second surface of the target, for example the inner diameter and outer diameter of a tubular. In embodiments, the specular band-pass angular filter is configured such that a lower angular cut-off is selected in the range of -90 to -45 degrees, and preferably -60 degrees, and an upper angular cut-off is selected in the range of 45 to 90 degrees, and preferably 60 degrees. Image frames are generated by beamforming using only the paths or rays that form angles within the range allowed by the specular band-pass filter.

Exemplary renderings of the filtered and beamformed images **92** are shown in FIG. **13****.** In an embodiment, the filtered and beamformed images are compounded to generate compounded image **94.** The pixel intensity values in image **94** with values greater than a predetermined threshold are identified as belonging to a crack region **96,** as depicted in image **98.**

### Crack Detection from Mode Conversion

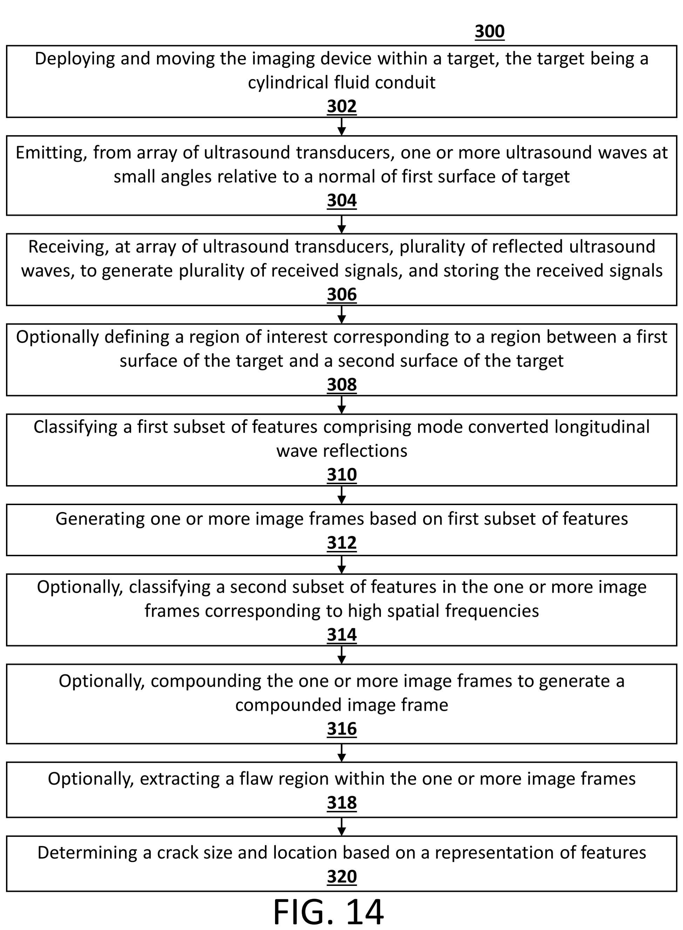

FIG. **14** is a flowchart of an example process 300. In some implementations, one or more process blocks of FIG. **14** may be performed by a device.

As shown in FIG. **14****,** process **300** may include deploying the imaging device within a target, such as a cylindrical fluid conduit (block **302).** As also shown in FIG. **14****,** process **300** may include emitting, from the array of ultrasound transducers, one or more ultrasound waves at a predetermined angle relative to a normal direction of a first surface of the target (block **304).** In embodiments, wavefronts are emitted using flat transmit, or small angle transmit, preferably within the range of -5° to 5°. As further shown in FIG. **14****,** process **300** may include receiving, at the array of ultrasound transducers, a plurality of reflected ultrasound waves for each of the one or more emitted ultrasound waves, to generate a plurality of received signals, and storing said received signals (block 306). As also shown in FIG. **14****,** process **300** may optionally include defining a region of interest, for example defining a region between a first surface of the target and a second surface of the target (block **308);** classifying a first subset of features comprising mode converted longitudinal wave reflections from the plurality of received signals, for example, by applying one or more filters to the plurality of received signals to generate the first subset of classified features (block **310);** generating one or more image frames based on the subset of features (block **312);** optionally classifying a second subset of features, the second subset of features corresponding to features with high spatial frequencies, for example by applying a filter to the one or more image frames (block **314);** optionally compounding the one or more image frames to generate one or more compounded image frames (block **316);** optionally extracting a flaw region within the one or more image frames based on a representation of the first subset of features in the image frames (block 318); and determining one of a flaw size and a flaw location in the target by based on a representation of the first subset of features in the image frames, for example, by determining a distance of the crack region from one of a first surface and a second surface of the target (block **320).**

Process **300** may include additional implementations, such as any single implementation or any combination of implementations described below and/or in connection with one or more other processes described elsewhere herein. In an embodiment, a predetermined angle is zero-degrees with respect to a normal direction to the first surface, the plurality of received signals include one or more of amplitude and phase information, and the subset of features are classified by filtering the signals based on said amplitude and phase information.

Although FIG. **14** shows example blocks of process **300,** in some implementations, process **300** may include additional blocks, fewer blocks, different blocks, or differently arranged blocks than those depicted in FIG. **14****.** Additionally, or alternatively, two or more of the blocks of process **300** may be performed in parallel.

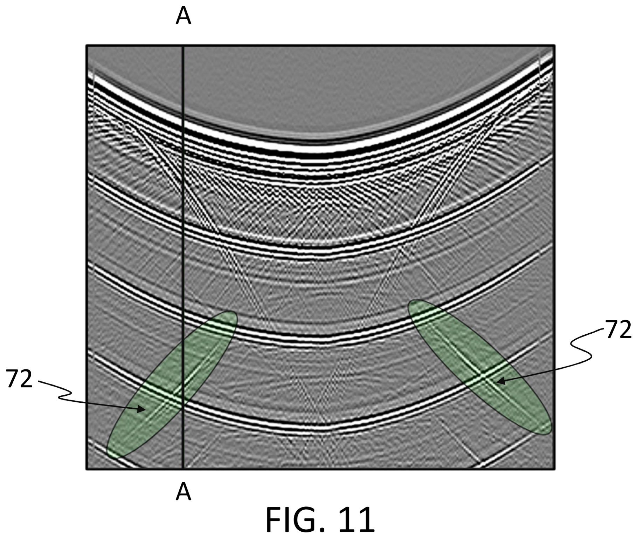

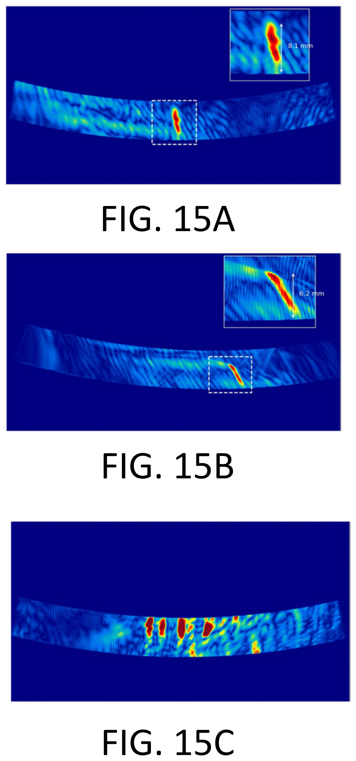

With reference to FIG. **15A - 15C****,** exemplary ultrasound image data for three different crack scenarios is shown. In an embodiment, a target is insonated with a plane ultrasound wave at a 0° transmit angle, and reflected ultrasound waves are received at the transducer array **12,** which include mode-converted L-wave reflections along paths **70b,** among others. A region of interest is defined in the ultrasound data to remove the reflections of the first and second surfaces of the target, and to retain sloping events **72,** as illustrated in FIGs. **10** and **11****.** A first subset of features corresponding to the mode-converted L-wave reflections are classified as described herein and used to generate one or more beamformed image frames. In an embodiment, the one or more beamformed image frames include phase and amplitude information. A filter is applied to the beamformed ultrasound images, which removes high spatial frequencies including noise and higher order reflection modes and image artifacts, using one or more of the phase and amplitude information, leaving ultrasound data corresponding to mode converted transverse reflection waves from cracks within the target wall, as illustrated in exemplary images of FIG. **15A, 15B,** and **15C****.** In an embodiment, pixel intensity values greater than a predetermined threshold are identified as belonging to a crack region.

FIG. **15A** is an exemplary ultrasound image including mode-converted L-wave reflections depicting an 8 mm crack on a tubular casing with a nominal 9 mm thickness, generally perpendicular to the outer diameter, and extending from the outer diameter of the casing. FIG. **15B** is an exemplary ultrasound image including mode-converted L-wave reflections depicting a 4 mm crack on a tubular casing with a nominal 9 mm thickness, at an approximate tilt angle of 20°, and extending from the outer diameter of the casing. FIG. **15C** is an exemplary ultrasound image including mode-converted L-wave reflections depicting four 3 mm cracks on a tubular casing with a nominal 9 mm thickness, generally perpendicular to the inner diameter, and extending from the inner diameter of the casing.

### Crack Detection from Transmissive Events

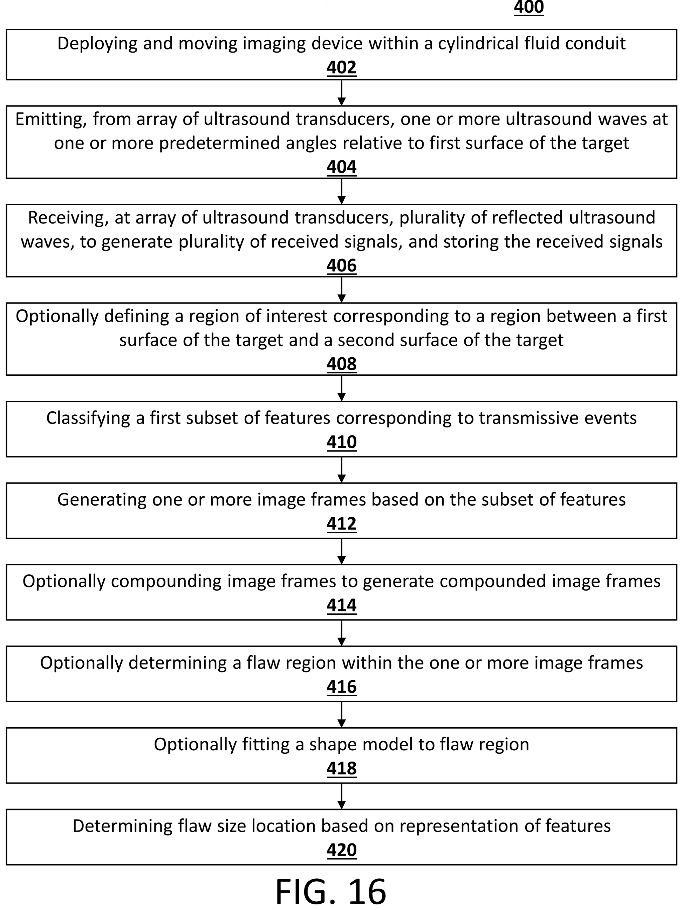

FIG. **16** is a flowchart of an example process **400.** In some implementations, one or more process blocks of FIG. **16** may be performed by a device.

As shown in FIG. **16****,** process **400** may include deploying the imaging device within a target, such as a cylindrical fluid conduit (block **402).** As also shown in FIG. **16****,** process **400** may include emitting, from the array of ultrasound transducers, one or more ultrasound waves at one or more predetermined angles relative to a first surface of the target (block **404).** In embodiments, wavefronts are emitted using one or more of angled transmit and flat transmit. As further shown in FIG. **16****,** process **400** may include receiving, at the array of ultrasound transducers, a plurality of reflected ultrasound waves for each of the one or more emitted ultrasound waves, to generate a plurality of received signals, and storing said received signals (block **406).** As also shown in FIG. **16****,** process **400** may optionally include defining a region of interest, for example defining a region between a first surface of the target and a second surface of the target (block **408).** As further shown in FIG. **16****,** process **400** may include classifying a first subset of features from the plurality of received signals corresponding to transmissive events, for example, by applying a specular reflection band-stop angular filter to reflected wave directions with respect to incident wave directions to generate the first subset of classified features (block **410);** optionally, process **400** may include classifying a second subset of features from the plurality of received signals corresponding to reflective events, for example, by applying a specular reflection band-pass angular filter to reflected wave directions with respect to incident wave directions to generate the second subset of classified features (not shown). As also shown in FIG. **16****,** process **400** may include generating one or more image frames based on the subset of features (block **412);** optionally, process **400** may include generating the one or more image frames based on one of the first subset of features and the second subset of features, and excluding the other one of the first subset of features and second subset of features (not shown). As further shown in FIG. **16****,** process **400** may optionally include compounding the one or more image frames to generate one or more compounded image frames (block **414);determining** a flaw region within the one or more image frames based on a representation of the subsets of features (block **416)** and optionally fitting a shape model to the flaw region, to estimate shape model parameter values (block **418).** As also shown in FIG. **16****,** process **400** may include determining one of a flaw size and a flaw location in the target based on a representation of the subsets of features in the one or more image frames, including optionally determining the flaw size from the shape model parameter values and including determining a distance of the flaw region from one of the first surface and the second surface of the target (block **420).**

Although FIG. **16** shows example blocks of process **400,** in some implementations, process **400** may include additional blocks, fewer blocks, different blocks, or differently arranged blocks than those depicted in FIG. **16****.** Additionally, or alternatively, two or more of the blocks of process **400** may be performed in parallel.

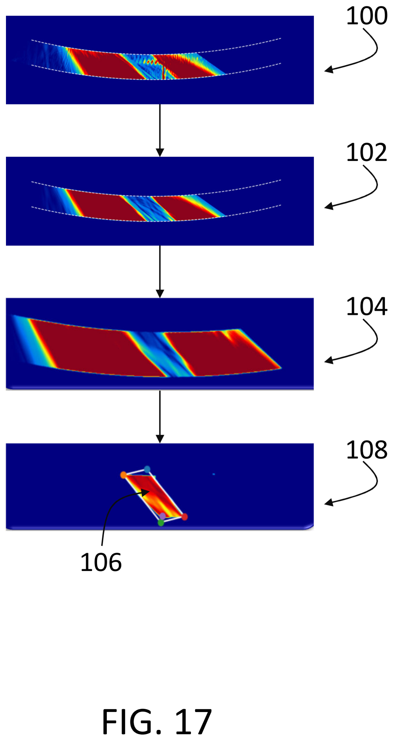

With reference to FIG. **17****,** exemplary ultrasound image data at various stages of the method for flaw detection according to one embodiment are shown. In an embodiment, a target is insonated with a plane ultrasound wave with a generally opposing, non-zero transmit angle, and reflected ultrasound waves are received at the transducer array **12,** which includes reflections along paths **54b** and **56b,** as illustrated in FIGs. **7A** and **7B****,** among others. Exemplary renderings of this data are illustrated at **100** in FIG. **17****.** In this embodiment, an anti-specular or band-stop angular filter is configured to block specular reflections from a predetermined range of angles of the reflected paths or directions, with respect to an incident ray direction or path, and to allow reflections with directions forming angles outside of the predetermined angular range, to classify a first subset of features and a second subset of features. An anti-specular band-stop angular filter is defined by a first, lower angular cut-off and a second, upper angular cut-off, such that reflection angles between the first, lower angular cut-off and the second, upper angular cut-off are removed, and reflection angles outside of the range are retained. As a non-limiting example, the specular band-pass angular filter can be set to remove reflections from the first surface and the second surface of the target, for example the inner diameter and outer diameter of a tubular, as illustrated in the figures. In embodiments, the specular band-pass angular filter is configured such that a lower angular cut-off is selected in the range of -90 to -45 degrees, and preferably -60 degrees, and an upper angular cut-off is selected in the range of 45 to 90 degrees, and preferably 60 degrees, ensuring that transmit-side waves do not form angles with the receive-side waves that are within the reflective regime. In other words, signals from transmissive events are retained. Image frames are generated by beamforming using only the paths that form angles within the range allowed by the anti-specular band-stop filter. The resulting beamformed images include one or more residual signal regions formed from the filtered signals, and include one or more signal shadow or signal void regions, with no significant contributions from signals from transmissive events. Exemplary renderings of the filtered and beamformed images **102** are shown. The pixel intensity values in image **104** greater than a predetermined threshold are identified as belonging to a crack region **106,** as depicted in image **108.**

A flaw or crack size is generated by determining the dimensions of a crack region. The shape of the crack region can be estimated, and one or more dimensions of the shape are used to determine the parameters to describe crack size. The shape of the flaw or crack region can be determined using known methods, such as calculating a bounding box, fitting a geometric model to the pixel intensity data, or the like. As described above, a crack region is expected to generate a shape generally corresponding to a parallelogram. To estimate crack size, a bounding box is calculated around the crack region, and the crack size is determined from the dimensions of the parallelogram, for example from the base. The remaining wall thickness is calculated as the difference between the nominal thickness value of the target and the estimated crack size projected along a direction normal to the surface of the target. In embodiments, a flaw tilt is determined from one or more image frames generated from specular reflections, and a final flaw or crack size is determined based on a flaw tilt and the dimensions of a crack region. In a non-limiting example, a flaw tilt angle is used to scale a crack region dimension to obtain a more accurate representation of a flaw size.

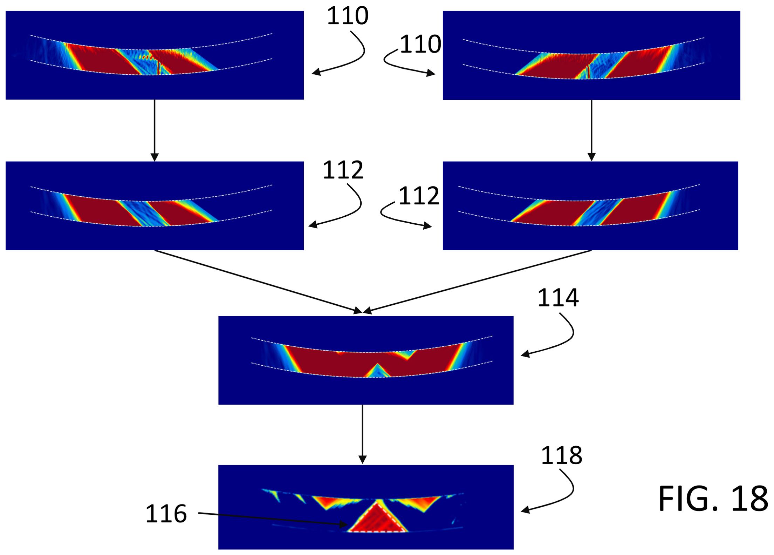

With reference to FIG. **18****,** exemplary ultrasound image data at various stages of the method for crack detection according to one embodiment are shown. In an embodiment, a target is insonated with one or more plane ultrasound waves with generally opposing, non-zero transmit angles, and reflected ultrasound waves are received at the transducer array **12,** which includes reflections along paths **54b** and **56b,** among others. Exemplary renderings of this data are illustrated at **110** in FIG. **18****.** In this embodiment, an anti-specular or band-stop angular filter is configured to block specular reflections from a predetermined range of angles of the reflected paths or directions, with respect to an incident ray direction or path, and to allow reflections with directions forming angles outside of the predetermined angular range, as defined above. Image frames are generated by beamforming using only the paths that form angles within the range allowed by the anti-specular band-stop filter. Exemplary renderings of the filtered and beamformed images **112** are shown. In an embodiment, the filtered and beamformed images are compounded to generate compounded image **114.** The pixel intensity values greater than a predetermined threshold are identified as belonging to a crack region **116,** as depicted in image **118.**

A crack size is determined by measuring the dimensions of a crack region. The shape of the crack region can be estimated, and one or more dimensions of the shape are used to determine the parameters to describe crack size. The shape of the crack region is determined using known methods, such as calculating a bounding box, fitting a geometric model to the pixel intensity data, or using other known methods. As described above for the embodiment illustrated in FIG. **18****,** a crack region is expected to generate a shape generally corresponding to a triangle. To estimate crack size, a bounding box is calculated around the crack region, and the crack size is determined from the dimensions of the triangle, for example from the base or the height of the triangle. In an embodiment, the remaining wall thickness is calculated as the difference between the nominal thickness value of the target and the estimated crack size, projected along a direction normal to the surface of the target. In embodiments, a flaw tilt is determined from one or more image frames generated from specular reflections, and a final flaw or crack size is determined based on a flaw tilt and the dimensions of a crack region. In a non-limiting example, a flaw tilt angle is used to scale a crack region dimension to obtain a more accurate representation of a flaw size.

### EXAMPLE 1

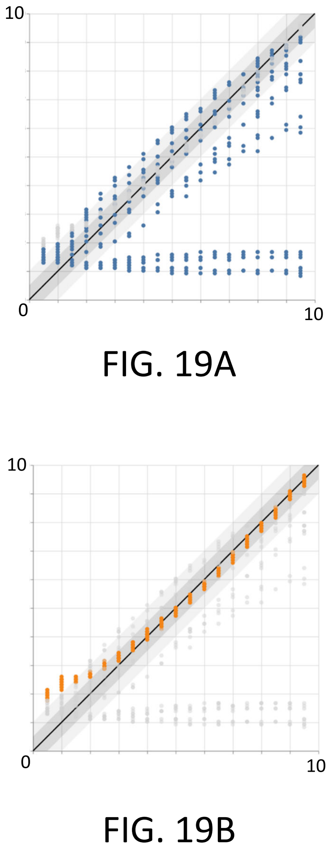

Simulated ultrasound data was generated for a variety of crack depths and a variety of crack tilts, using commercially available software (CIVA, Extende), and the crack detection methods as described herein were applied to the resulting data. Simulated data was generated for crack depths ranging from 1 mm to 10 mm, for crack tilts ranging from -15° to +15°, and for different defect azimuths from -15° to +15°. Five thousand simulated frames were generated. Crack size was characterized using specular reflections from angled transmit and signal shadow methods as described herein, and defect depth was measured. FIG. **19A** shows a plot of defect depth on the horizontal axis vs. measured defect depth on the vertical axis, for crack detection using specular reflections from angled transmit, as described herein, for defects with crack tilts in the range of -15° to 15°, and defect azimuths in the range of -1° to 1°. FIG. **19B** shows a plot of defect depth on a horizontal axis vs. measured defect depth on a vertical axis, for crack detection using signal shadow as described herein, for defects with crack tilts in the range of -15° to 15°, and defect azimuths in the range of -1° to 1°. The defects measured by the signal shadow methods as described herein show consistently smaller errors in estimating crack depth, for a significantly broader range of defect tilts and defect azimuth. In other words, the methods as described herein detect a significantly broader range of defects, both with respect to crack size and crack tilt, than methods which rely solely on direct imaging of specular reflections.

The quantification of wall loss, including the accurate quantification of cracks, is important to determine the structural integrity of a tubular or pipeline, such as by calculating the burst pressure a wellbore tubular or pipeline, which depends on accurate values of wall thickness. If the material is assumed to be homogeneous and isotropic, and the stress distribution is uniform, burst pressure is calculated using Barlow's formula, given by P = (2 * S * t) / D, where P is the burst pressure, S is the material's yield strength, t is the wall thickness of the tubular or pipeline, and D is the outer diameter. A conservative calculation of burst pressure can be obtained using the River Bottom Method, to account for potential defects such as corrosion or wall thinning, which modifies Barlow's standard formula by incorporating a correction factor to account for these imperfections by using the effective wall thickness, which reduces wall thickness by the depth of the deepest defect or corrosion pit. Finite element analysis can also be used to calculate burst pressure, where a detailed geometric model of the wellbore tubular or pipeline is generated, which is then discretized into a finite element mesh consisting of numerous small, interconnected elements. Accurate values for wall thickness are critical for obtaining accurate simulated results, especially in cases involving complex geometries, material inhomogeneities, or localized defects. Determining burst pressure is critically important as it ensures the structural integrity and safety of the wellbore tubular or pipeline under operational pressures, especially in environments where corrosion and other forms of degradation are prevalent. Accurate burst pressure calculations help prevent catastrophic failures, environmental hazards, and costly downtimes by ensuring that the materials and design specifications can withstand the maximum internal pressures they will encounter during their service life.

It will be appreciated that data processing may be performed with plural processors: on the device, at the operations site, and optionally on a remote computer. The term 'processor' is intended to include computer processors, cloud processors, microcontrollers, firmware, GPUs, FPGAs, and electrical circuits that manipulate analogue or digital signals. While it can be convenient to process data as described herein, using software on a general computer, many of the steps could be implemented with purpose-built circuits.

It will be appreciated that the various memories discussed may be implemented as one or more memory units. Non-volatile memory is used to store the compressed data and instructions so that the device can function without continuous power. Volatile memory (RAM and cache) may be used to temporarily hold raw data and intermediate computations. Additionally or alternatively, the compressed images may be transmitted over a telemetry unit of the device to a corresponding telemetry unit of the surface computer system.

Terms such as "top", "bottom", "distal", "proximate" "downhole", "uphole", "below," "above," "upper, downstream," are used herein for simplicity in describing relative positioning of elements of the conduit or device, as depicted in the drawings or with reference to the surface datum. Although the present methods, systems and devices have been described and illustrated with respect to preferred embodiments and preferred uses thereof, it is not to be so limited since modifications and changes can be made therein which are within the full, intended scope as understood by those skilled in the art.

The invention is illustrated by the following items:
1. A method of detecting a flaw in a target, the method comprising:
   deploying an ultrasound imaging device comprising at least one phased array ultrasonic transducer including a plurality of transducer elements, to image the target;
   emitting, from the at least one phased array ultrasonic transducer, one or more ultrasound waves, such that wavefronts of the ultrasound waves strike a first surface of the target at one or more predetermined angles relative to said first surface;
   receiving reflected ultrasound waves at the plurality of transducer elements of the phased array ultrasonic transducer to generate a plurality of received signals, and
   storing the plurality of received signals;
   classifying, from the plurality of received signals:
      i) a subset of features for ray directions corresponding to transmissive events;
   generating one or more image frames based on i); and
   determining a flaw size based on a representation of i) within the one or more image frames.
2. The method of item 1, further comprising:
   tracing rays from the phased array ultrasonic transducer to the target and back to the plurality of transducer elements, using a model of the target including at least a surface of the target;
   and wherein classifying further comprises applying an angular filter to the traced rays, the angular filter is defined by a first angular cut-off and a second angular cut-off.
3. The method of item 1 or 2, wherein the plurality of received signals include amplitude and phase information, and wherein classifying further comprises applying an angular filter using one or more of amplitude and phase information of the plurality of received signals, the angular filter is defined by a first angular cut-off and a second angular cut-off.
4. The method of any one of the preceding items, wherein the angular filter is a band-stop angular filter, the first angular cutoff is in the range of -90 to -45 degrees with respect to an incident ray direction, and being preferably substantially -60 degrees, and the second angular cut-off is in the range of 45 to 90 degrees with respect to an incident ray direction, and being preferably substantially 60 degrees.
5. The method of any one of the preceding items, further comprising determining a flaw region in the one or more image frames based on a representation of one of i), the flaw region comprising a flaw region size and a flaw region location, and determining a flaw size further comprises determining one or more of a flaw size and a flaw location based on one or more of the flaw region size and the flaw region location within the one or more image frames.
6. The method of any one of the preceding items, preferably of item 5, wherein determining the flaw region further comprises determining model parameter values for a shape model defining a shape of the flaw region, and wherein one or more of the flaw region size and the flaw region location are determined based on the model parameter values.
7. The method of any one of the preceding items, preferably of item 6, wherein the shape model defines one of a triangle and a quadrilateral.
8. The method of any one of the preceding items, wherein classifying further comprises classifying, from the plurality of received signals:
   ii) a subset of features for ray directions corresponding to reflective events;
   and wherein generating one or more image frames further comprises generating the one or more image frames based on one of i) and ii) and excluding the other one of i) and ii), and determining a flaw size further comprises determining a flaw size based on a representation of one of i) and ii).
9. The method of any one of the preceding items, preferably of item 8, further comprising:
   tracing rays from the phased array ultrasonic transducer to the target and back to the plurality of transducer elements, using a model of the target including at least a surface of the target;
   and wherein classifying ii) further comprises applying an angular filter to the traced rays.
10. The method of any one of the preceding items, preferably of item 9, wherein the angular filter is a band-pass angular filter, the first angular cutoff is in the range of -90 to - 45 degrees with respect to an incident ray direction, and being preferably substantially - 60 degrees, and the second angular cut-off is in the range of 45 to 90 degrees with respect to an incident ray direction, and being preferably substantially 60 degrees.
11. The method of any one of the preceding items, further comprising the step of compounding the one or more image frames to generate one or more compounded image frames, wherein the one or more image frames are generated from ultrasound waves with wavefronts that strike the first surface from opposing angles, relative to said first surface, and wherein compounding the one or more image frames further comprises performing one of multiplicative compounding and maximum value compounding on the one or more image frames.
12. The method of any one of the preceding items, wherein the one or more predetermined angles relative to said first surface comprise one or more predetermined non-zero degree angles with respect to a normal direction of said first surface.
13. The method of any one of the preceding items, wherein the wavefronts of the ultrasound waves strike a first surface of the target at one or more opposing angles with respect to a normal direction of said first surface, the opposing angles in the range of -30 to -10 degrees and 10 to 30 degrees, respectively.
14. The method of any one of the preceding items, preferably of item 13 wherein the opposing angles comprise -20 and 20 degrees when the target is in water and the opposing angles comprise -16.5 and 16.5 degrees when the target is in crude oil.
15. A method of detecting a flaw in a target, the method comprising:
   deploying an ultrasound imaging device comprising at least one phased array ultrasonic transducer including a plurality of transducer elements, to image the target;
   emitting, from the at least one phased array ultrasonic transducer, one or more ultrasound waves, such that wavefronts of the ultrasound waves strike a first surface of the target at one or more predetermined angles relative to said first surface;
   receiving reflected ultrasound waves at the plurality of transducer elements of the phased array ultrasonic transducer to generate a plurality of received signals, and
   storing the plurality of received signals;
   tracing rays from the phased array ultrasonic transducer to the target and back to the plurality of transducer elements, using a model of the target including at least a surface of the target;
   classifying, from the plurality of received signals:
      iii) a subset of features for ray directions corresponding to reflective events based on applying an angular filter to the traced rays;
   generating one or more image frames based on iii); and
   determining a flaw size based within the one or more image frames based on a representation of iii).
16. The method of item 15, wherein the angular filter is a band-pass angular filter with a first angular cutoff in the range of -90 to -45 degrees with respect to an incident ray direction, and being preferably substantially -60 degrees, and with a second angular cut-off in the range of 45 to 90 degrees with respect to an incident ray direction, and being preferably substantially 60 degrees.
17. A method of detecting a flaw in a target, the method comprising:
   deploying an ultrasound imaging device comprising at least one phased array ultrasonic transducer including a plurality of transducer elements, to image the target;
   emitting, from the at least one phased array ultrasonic transducer, one or more ultrasound waves, such that wavefronts of the ultrasound waves strike a first surface of the target at an angle between -5 and 5 degrees with respect to a normal direction of said first surface;
   receiving reflected ultrasound waves at the plurality of transducer elements of the phased array ultrasonic transducer to generate a plurality of received signals, and storing the plurality of received signals;
   classifying, from the plurality of received signals, a subset of mode-converted longitudinal wave reflective features for ray directions corresponding to reflective events;
   generating one or more image frames based on the subset of mode-converted longitudinal wave reflective features; and
   determining a flaw size based on a representation of the subset of mode-converted longitudinal wave reflective features within the one or more image frames.
18. The method of item 17, further comprising compounding the one or more image frames to generate one or more compounded image frames, wherein compounding comprises one of multiplicative compounding and maximum value compounding.
19. An imaging system for inspecting a target for defects comprising:
   an imaging apparatus comprising:
   an elongate body deployable in a cylindrical fluid conduit;
   one or more outward-facing ultrasound transducer phased arrays configured to emit ultrasound plane waves and to receive reflected ultrasound waves; and
   a memory for storing a plurality of received signals; at least one processor, including one or more cloud processors; and
   a computer-readable medium storing instructions that, when executed by the at least one processor, cause it to perform the method of any one of items 1 to 18.

## Claims

1. A method of detecting a flaw in a target, the method comprising:
deploying an ultrasound imaging device comprising at least one phased array ultrasonic transducer including a plurality of transducer elements, to image the target;
emitting, from the at least one phased array ultrasonic transducer, one or more ultrasound waves, such that wavefronts of the ultrasound waves strike a first surface of the target at one or more predetermined angles relative to said first surface;
receiving reflected ultrasound waves at the plurality of transducer elements of the phased array ultrasonic transducer to generate a plurality of received signals, and
storing the plurality of received signals;
classifying, from the plurality of received signals:
i) a subset of features for ray directions corresponding to transmissive events;
generating one or more image frames based on i); and
determining a flaw size based on a representation of i) within the one or more image frames.

2. **The** method of claim 1, further comprising:
tracing rays from the phased array ultrasonic transducer to the target and back to the plurality of transducer elements, using a model of the target including at least a surface of the target;
and wherein classifying further comprises applying an angular filter to the traced rays, the angular filter is defined by a first angular cut-off and a second angular cut-off.

3. The method of claim 1, wherein the plurality of received signals include amplitude and phase information, and wherein classifying further comprises applying an angular filter using one or more of amplitude and phase information of the plurality of received signals, the angular filter is defined by a first angular cut-off and a second angular cut-off.

4. The method of any one of claims 2 and 3, wherein the angular filter is a band-stop angular filter, the first angular cutoff is in the range of -90 to -45 degrees with respect to an incident ray direction, and being preferably substantially -60 degrees, and the second angular cut-off is in the range of 45 to 90 degrees with respect to an incident ray direction, and being preferably substantially 60 degrees.

5. **The** method of claim 1, further comprising determining a flaw region in the one or more image frames based on a representation of one of i), the flaw region comprising a flaw region size and a flaw region location, and determining a flaw size further comprises determining one or more of a flaw size and a flaw location based on one or more of the flaw region size and the flaw region location within the one or more image frames.

6. **The** method of claim 5, wherein determining the flaw region further comprises determining model parameter values for a shape model defining a shape of the flaw region, and wherein one or more of the flaw region size and the flaw region location are determined based on the model parameter values.

7. **The** method of claim 6, wherein the shape model defines one of a triangle and a quadrilateral.

8. **The** method of claim 1, wherein classifying further comprises classifying, from the plurality of received signals:
ii) a subset of features for ray directions corresponding to reflective events;
and wherein generating one or more image frames further comprises generating the one or more image frames based on one of i) and ii) and excluding the other one of i) and ii), and determining a flaw size further comprises determining a flaw size based on a representation of one of i) and ii).

9. **The** method of claim 8, further comprising:
tracing rays from the phased array ultrasonic transducer to the target and back to the plurality of transducer elements, using a model of the target including at least a surface of the target;
and wherein classifying ii) further comprises applying an angular filter to the traced rays.

10. **The** method of claim 9, wherein the angular filter is a band-pass angular filter, the first angular cutoff is in the range of -90 to -45 degrees with respect to an incident ray direction, and being preferably substantially -60 degrees, and the second angular cut-off is in the range of 45 to 90 degrees with respect to an incident ray direction, and being preferably substantially 60 degrees.

11. **The** method of any one of claims 1 to 10, further comprising the step of compounding the one or more image frames to generate one or more compounded image frames, wherein the one or more image frames are generated from ultrasound waves with wavefronts that strike the first surface from opposing angles, relative to said first surface, and wherein compounding the one or more image frames further comprises performing one of multiplicative compounding and maximum value compounding on the one or more image frames.

12. The method of any one of claims 1 to 11, wherein the one or more predetermined angles relative to said first surface comprise one or more predetermined non-zero degree angles with respect to a normal direction of said first surface.

13. The method of any one of claims 1 to 12, wherein the wavefronts of the ultrasound waves strike a first surface of the target at one or more opposing angles with respect to a normal direction of said first surface, the opposing angles in the range of -30 to -10 degrees and 10 to 30 degrees, respectively.

14. The method of claim 13, wherein the opposing angles comprise -20 and 20 degrees when the target is in water and the opposing angles comprise -16.5 and 16.5 degrees when the target is in crude oil.

15. A method of detecting a flaw in a target, the method comprising:
deploying an ultrasound imaging device comprising at least one phased array ultrasonic transducer including a plurality of transducer elements, to image the target;
emitting, from the at least one phased array ultrasonic transducer, one or more ultrasound waves, such that wavefronts of the ultrasound waves strike a first surface of the target at one or more predetermined angles relative to said first surface;
receiving reflected ultrasound waves at the plurality of transducer elements of the phased array ultrasonic transducer to generate a plurality of received signals, and
storing the plurality of received signals;
tracing rays from the phased array ultrasonic transducer to the target and back to the plurality of transducer elements, using a model of the target including at least a surface of the target;
classifying, from the plurality of received signals:
iii) a subset of features for ray directions corresponding to reflective events based on applying an angular filter to the traced rays;
generating one or more image frames based on iii); and
determining a flaw size based within the one or more image frames based on a representation of iii).
